# EUROPEAN PATENT APPLICATION

(11) **EP 4 369 741 A1**
(43) Date of publication of application: **15.05.2024**
(21) Application number: 22836957.5
(22) Date of filing: 06.07.2022

(54) **METHOD AND APPARATUS FOR PROCESSING OVERLAPPING PUCCH TIME DOMAIN RESOURCES**

(30) Priority: 09.07.2021 CN 202110778037
(71) Applicant: VIVO MOBILE COMMUNICATION CO., LTD., Dongguan, Guangdong 523863 (CN)
(72) Inventor: LI, Na, Dongguan, Guangdong 523863 (CN)
(74) Representative: Conti, Marco
(86) International application number: PCT/CN2022/104135
(87) International publication number: WO 2023/280211

(57) **Abstract**

This application discloses a method and an apparatus for handling overlapping of PUCCH time domain resources. The method includes: in a case that a first HARQ-ACK and a second HARQ-ACK of the same priority are present and time domain resources for a PUCCH carrying the first HARQ-ACK and a PUCCH carrying the second HARQ-ACK overlap, or that the PUCCH carrying the first HARQ-ACK and the PUCCH carrying the second HARQ-ACK are in a same time unit and a terminal does not support transmission of PUCCHs of two HARQ-ACKs of the same priority in one time unit, multiplexing, by the terminal, the first HARQ-ACK and the second HARQ-ACK onto one PUCCH, where the first HARQ-ACK includes a HARQ-ACK for a group-common physical downlink shared channel PDSCH and/or a HARQ-ACK for a group-common PDCCH, and the second HARQ-ACK includes a HARQ-ACK for a unicast PDSCH and/or a HARQ-ACK for a unicast PDCCH.

## Description

### CROSS-REFERENCE TO RELATED APPLICATIONS

This application claims priority to Chinese Patent Application No. 202110778037.7 filed in China on July 09, 2021, which is incorporated herein by reference in its entirety.

### TECHNICAL FIELD

This application pertains to the field of communications technologies, and specifically relates to a method and an apparatus for handling overlapping of PUCCH time domain resources.

### BACKGROUND

In previous systems, there are in the uplink a physical uplink control channel (Physical Uplink Control Channel, PUCCH) including a PUCCH carrying a hybrid automatic repeat request acknowledgment (Hybrid Automatic Repeat request Acknowledge, HARQ-ACK), a PUCCH carrying channel state information (Channel State Information, CSI), and a PUCCH carrying a scheduling request (Scheduling Request, SR), and a physical uplink shared channel (Physical Uplink Shared Channel, PUSCH). New Radio (New Radio, NR) defines a conflict handling order when different channels overlap. However, when user equipment (User Equipment, UE) supports both unicast service reception and groupcast multicast service reception, the PUCCH in the uplink further includes a HARQ-ACK feedback for a groupcast PDSCH. When a high/low-priority HARQ-ACK PUCCH for the groupcast PDSCH overlaps another uplink channel, the problem of how the UE should handle the conflicting channels needs to be resolved.

### SUMMARY

An objective of the embodiments of this application is to provide a method and an apparatus for handling overlapping of PUCCH time domain resources, so as to resolve the problem of how the UE should handle the conflicting channels when a high/low-priority HARQ-ACK PUCCH for the groupcast PDSCH overlaps another uplink channel.

According to a first aspect, a method for handling overlapping of PUCCH time domain resources is provided. The method includes:
in a case that a first HARQ-ACK and a second HARQ-ACK of the same priority are present and time domain resources for a PUCCH carrying the first HARQ-ACK and a PUCCH carrying the second HARQ-ACK overlap, or that the PUCCH carrying the first HARQ-ACK and the PUCCH carrying the second HARQ-ACK are in a same time unit and a terminal does not support transmission of PUCCHs of two HARQ-ACKs of the same priority in one time unit, multiplexing, by the terminal, the first HARQ-ACK and the second HARQ-ACK onto one PUCCH, where
the first HARQ-ACK includes a HARQ-ACK for a group-common PDSCH and/or a HARQ-ACK for a group-common PDCCH, and the second HARQ-ACK includes a HARQ-ACK for a unicast PDSCH and/or a HARQ-ACK for a unicast PDCCH.

According to a second aspect, an apparatus for handling overlapping of PUCCH time domain resources is provided. The apparatus is applied to a terminal and includes:
a multiplexing module, configured to: in a case that a first HARQ-ACK and a second HARQ-ACK of the same priority are present and time domain resources for a PUCCH carrying the first HARQ-ACK and a PUCCH carrying the second HARQ-ACK overlap, or that the PUCCH carrying the first HARQ-ACK and the PUCCH carrying the second HARQ-ACK are in a same time unit and a terminal does not support transmission of PUCCHs of two HARQ-ACKs of the same priority in one time unit, multiplex, by the terminal, the first HARQ-ACK and the second HARQ-ACK onto one PUCCH, where
the first HARQ-ACK includes a HARQ-ACK for a group-common physical downlink shared channel PDSCH and/or a HARQ-ACK for a group-common PDCCH, and the second HARQ-ACK includes a HARQ-ACK for a unicast PDSCH and/or a HARQ-ACK for a unicast PDCCH.

According to a third aspect, a terminal is provided. The terminal includes: a processor, a memory, and a program stored on the memory and capable of running on the processor, where when the program is executed by the processor, the steps of the method according to the first aspect are implemented.

According to a fourth aspect, a readable storage medium is provided. The readable storage medium stores a program or instructions, where when the program or instructions are executed by a processor, the method for handling according to the first aspect is implemented.

According to a fifth aspect, a computer program product is provided. The computer program product is stored in a non-volatile storage medium, and the computer program product is executed by at least one processor to implement the steps of the method for handling according to the first aspect.

According to a sixth aspect, a chip is provided. The chip includes a processor and a communication interface, the communication interface and the processor are coupled to each other, and the processor is configured to run a program or instructions to implement the method for handling according to the first aspect.

According to a seventh aspect, a communication device is provided and is configured to perform the method for handling according to the first aspect.

In the embodiments of this application, a method for handling overlapping of uplink channel PUCCH time domain resources is provided, which can be used in a scenario containing a HARQ-ACK for a group-common PDSCH, thereby improving effectiveness of a communication system.

### BRIEF DESCRIPTION OF DRAWINGS

FIG. 1 is a schematic diagram of an architecture of a wireless communication system according to an embodiment of this application;
FIG. 2 is a schematic diagram of UCI being multiplexed onto a PUCCH;
FIG. 3 is a schematic flowchart of a method for handling overlapping of PUCCH time domain resources according to an embodiment of this application;
FIG. 4a to FIG. 4h are schematic diagrams of specific implementation procedures according to an embodiment of this application;
FIG. 5 is a schematic structural diagram of an apparatus for handling overlapping of PUCCH time domain resources according to an embodiment of this application;
FIG. 6 is a first schematic structural diagram of a terminal according to an embodiment of this application; and
FIG. 7 is a second schematic structural diagram of a terminal according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments derived by persons of ordinary skill in the art based on the embodiments of this application without creative efforts fall within the scope of protection of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that the technology described in the embodiments of this application is not limited to a long term evolution (Long Term Evolution, LTE)/LTE-advanced (LTE-Advanced, LTE-A) system, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, a new radio (New Radio, NR) system is described as an example below, and NR-related terminology is used in most of the following descriptions. The technology may also be used for applications other than the NR application, for example, in 6th (6th Generation, 6G) communication systems.

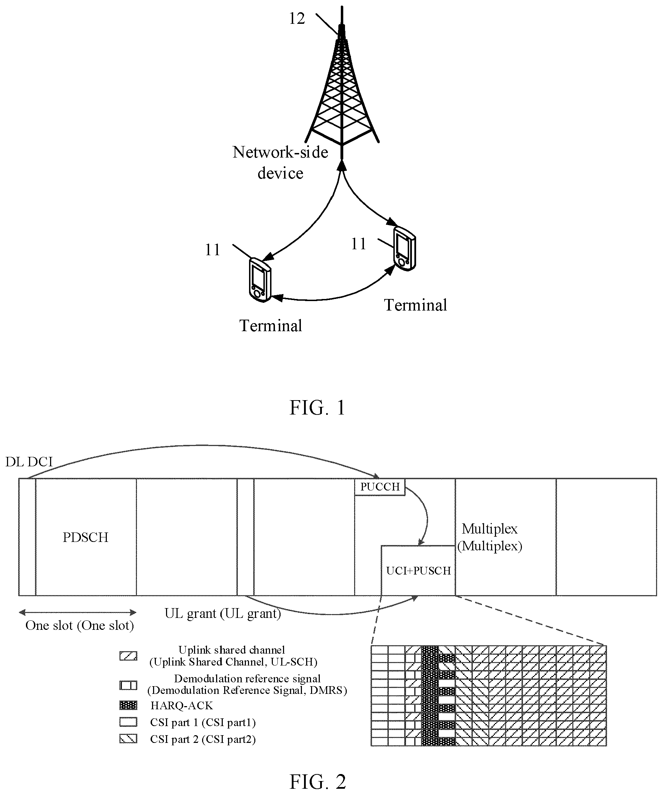

FIG. 1 is a block diagram of a wireless communication system to which an embodiment of this application is applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a WLAN access point, a Wi-Fi node, a transmission and reception point (Transmitting Receiving Point, TRP), or another appropriate term in the art. Provided that the same technical effects are achieved, the base station is not limited to a specified technical term. It should be noted that in the embodiments of this application, the base station in the NR system is merely used as an example, but does not limit a specific type of the base station.

For a better understanding of the solutions in the embodiments of this application, the following content is first described.

Compared with previous mobile communication systems, a future 5th generation (5^{th} Generation, 5G) mobile communication system needs to adapt to more diverse scenarios and service requirements. Main scenarios of 5G include enhanced mobile broadband (Enhance Mobile Broadband, eMBB), ultra-reliable low-latency communication (Ultra Reliable Low Latency Communication, URLLC), and massive machine type communication (Massive Machine Type Communication, mMTC). In these scenarios, requirements for high reliability, low latency, large bandwidth, and wide coverage are placed on the system. Some UEs may support different services. For example, UE supports both an ultra-reliable low-latency URLLC service and a large-capacity high-rate eMBB service. In an NR system, since different channels can have different starting symbols and lengths, transmission resources may overlap in the time domain. Generally, in order to maintain uplink single carrier characteristics, when there are a plurality of overlapping PUCCHs being transmitted in one slot, the single carrier characteristics of the UE may be destroyed, and a difference in transmit power may deteriorate channel estimation performance. Such a situation is usually considered as a conflict, and a corresponding conflict resolution needs to be designed to merge or discard some information.

### Multiplexing of a Release 15 (Rel-15) PUCCH and a PUCCH or a PUCCH and a PUSCH

Uplink control information (Uplink Control Information, UCI) is transmitted on a PUCCH. Uplink data is transmitted on a PUSCH. Due to reasons such as a starting symbol and a symbol length, there may be a time overlap between different PUCCHs or between a PUCCH and a PUSCH. In principle, the PUCCH and the PUSCH can be sent at the same time, that is, the UCI is retained on the PUCCH. However, this may increase a cubic metric. In addition, if out-of-band transmission requirements are to be met at a higher transmit power, and the PUSCH and the PUCCH are transmitted at the same time, there is a relatively large interval in the frequency domain (the PUCCH is usually transmitted at both ends of a frequency band), which brings challenges to the implementation of radio frequency (Radio Frequency, RF). Therefore, generally, if PUCCHs that need to transmit the UCI are multiplexed when time domain resources overlap or a PUCCH resource for the UCI that needs to be transmitted overlaps with a PUSCH resource in time, and a base station ensures that a condition for a handling time of UCI multiplexing is met when scheduling the PUCCH/PUSCH, the UCI is multiplexed onto one PUCCH or the UCI and data are multiplexed onto the PUSCH, to avoid sending different PUCCHs at the same time or avoid sending the PUCCH and the PUSCH at the same time. Refer to FIG. 2 for details.

The current protocol defines a timeline for multiplexing a PUCCH and a PUCCH, or a PUCCH and a PUSCH, that is, a predefined timeline that needs to be met for multiplexing of PUCCHs or multiplexing the UCI onto a PUSCH. If scheduling on the network side does not meet the timeline, the scheduling is considered an error case.

Handling order of multiplexing the PUCCHs or multiplexing the UCI onto the PUSCH

Within a PUCCH group, there may be a plurality of PUCCHs overlapping each other, and one of the PUCCHs may further overlap a plurality of PUSCHs. In order to resolve the problem of an overlap between time domain resources for a plurality of uplink transmission channels, NR Rel-15 defines the handling order of UE uplink multiplexing, which is specifically as follows:
1) Within a time unit, if there are a plurality of PUCCHs and at least two PUCCHs overlap each other, the UE first resolves the overlap between a PUCCH and a PUCCH, and then obtains a maximum of two non-overlapping PUCCHs; and
2) For a PUCCH output in 1), if the PUCCH does not overlap the PUSCH, the UE transmits the PUCCH; and if the PUCCH overlaps the PUSCH, the UE multiplexes, according to a specific rule, the UCI (except an SR) carried by the PUCCH onto an overlapping PUSCH for transmission.

### Multiplexing and prioritization of uplink transmission within UE of Release 16 (Rel-16)

In order to support different service requirements, Rel-16 introduces different physical layer priorities and supports the following conflict scenarios. In addition, behavior of the UE is defined for the following conflict scenarios.
(1) For high-priority (High Priority, HP) uplink transmission vs. high-priority uplink transmission, the UE handles it in accordance with Rel-15;
(2) For low-priority (Low Priority, LP) uplink transmission vs. low-priority uplink transmission, the UE handles it in accordance with Rel-15; and
(3) For high-priority uplink transmission vs. low-priority uplink transmission, the UE transmits the high-priority uplink transmission and cancels the low-priority uplink transmission.

Similarly, in order to enable the UE to have sufficient ability to cancel the transmission of the low-priority PUCCH/PUSCH and transmit the high-priority PUCCH/PUSCH, the base station needs to meet a specific timeline requirement when scheduling the PUCCH/PUSCH. The current protocol also defines a timeline for the prioritization of the PUCCH and the PUCCH, or the PUCCH and the PUSCH.

### Multicast broadcast service and feedback thereof

Currently, NR technology has evolved through two releases Rel-15 and Rel-16. In these two releases, broadcast/multicast (broadcast/multicast) features have not been supported. However, in many important use scenarios, such as public safety and mission critical (public safety and mission critical), vehicle to X (vehicle to X, V2X) applications (V2X applications), transparent Internet Protocol version 4 (Internet Protocol version 4, IPv4)/Internet Protocol version 6 (Internet Protocol version 6, IPv6) multicast delivery (transparent IPv4/IPv6 multicast delivery), Internet protocol television (Inter Protocol Television, IPTV), software delivery over wireless (software delivery over wireless), or group communication and Internet of things (Internet of Things, IoT) applications (group communications and IoT applications), broadcast/multicast features can provide substantial improvements, especially in terms of system efficiency and user experience. Therefore, in the next Release 17 (Rel-17), NR will introduce the broadcast/multicast features. A broadcast multicast service is mainly transmitted through a group-common PDSCH. The UE can receive both a group-common PDSCH and a unicast PDSCH. The UE can report HARQ-ACK information for the group-common PDSCH. Like HARQ-ACK information for the unicast PDSCH, the HARQ-ACK information for the group-common PDSCH can be divided into a high-priority HARQ-ACK and a low-priority HARQ-ACK. A low-priority HARQ-ACK and/or CSI/low-priority SR for the unicast PDSCH and a low-priority HARQ-ACK for a groupcast PDSCH can be multiplexed together. A high-priority HARQ-ACK and/or a high-priority SR for the unicast PDSCH and a high-priority HARQ-ACK for the groupcast PDSCH can be multiplexed together.

NR defines the handling order when transmissions of uplink transmission channels PUCCHs/PUSCHs of different types and priorities conflict. In addition, multiplexing is also supported when the HARQ-ACK and CSI/SR for the unicast PDSCH and the HARQ-ACK for the groupcast PDSCH overlap. However, when HARQ-ACK PUCCHs with different priorities for the groupcast PDSCH conflicts with another uplink transmission channel, how to determine the handling order of different channels/priorities needs to be resolved.

With reference to the accompanying drawings, a method and an apparatus provided in the embodiments of this application are described below in detail by using specific embodiments and application scenarios thereof.

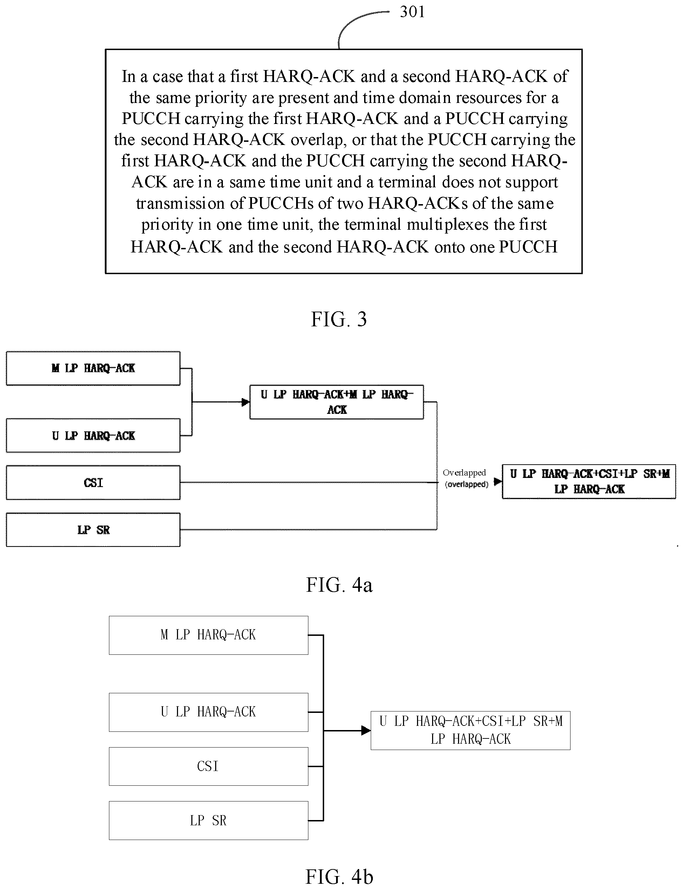

Referring to FIG. 3, an embodiment of this application provides a method for handling overlapping of PUCCH time domain resources. An execution body of the method may be a terminal. A specific step includes step 301.

Step 301: In a case that a first HARQ-ACK and a second HARQ-ACK of the same priority are present and time domain resources for a PUCCH carrying the first HARQ-ACK and a PUCCH carrying the second HARQ-ACK overlap, or that the PUCCH carrying the first HARQ-ACK and the PUCCH carrying the second HARQ-ACK are in a same time unit and a terminal does not support transmission of PUCCHs of two HARQ-ACKs of the same priority in one time unit, the terminal multiplexes the first HARQ-ACK and the second HARQ-ACK onto one PUCCH.

The above-mentioned first HARQ-ACK and second HARQ-ACK of the same priority means that the first HARQ-ACK and the second HARQ-ACK have the same priority or correspond to the same priority index. For example, the first HARQ-ACK and the second HARQ-ACK are both high-priority, with a corresponding priority index of 1; or the first HARQ-ACK and the second HARQ-ACK are both low-priority, with a corresponding priority index of 0.

The above-mentioned first HARQ-ACK includes a HARQ-ACK of a group-common PDSCH and/or a HARQ-ACK for a group-common PDCCH. It can be understood that a plurality of first HARQ-ACKs may be present. All of the plurality of first HARQ-ACKs are HARQ-ACKs for group-common PDSCHs; or all of the plurality of first HARQ-ACKs are HARQ-ACKs for group-common PDCCHs; or some of the plurality of first HARQ-ACKs are HARQ-ACKs for group-common PDSCHs, the others are HARQ-ACKs for group-common PDCCHs, which is not specifically limited in this embodiment of this application. The above-mentioned second HARQ-ACK includes a HARQ-ACK for a unicast PDSCH, and/or a HARQ-ACK for a unicast PDCCH, and the first HARQ-ACK and the second HARQ-ACK have the same priority. It can be understood that a plurality of second HARQ-ACKs may be present. All of the plurality of second HARQ-ACKs are HARQ-ACKs for unicast PDSCHs; or all of the plurality of second HARQ-ACKs are HARQ-ACKs for unicast PDCCHs; or some of the plurality of second HARQ-ACKs are HARQ-ACKs for unicast PDSCHs, the others are HARQ-ACKs for unicast PDCCHs, which is not specifically limited in this embodiment of this application.

Specifically, the first HARQ-ACK is the HARQ-ACK for the group-common PDSCH, and/or a HARQ-ACK for a group-common PDCCH that activates or releases a semi-persistent scheduling (Semi-Persistent Scheduling, SPS) PDSCH; the second HARQ-ACK is the HARQ-ACK for the unicast PDSCH, and/or a HARQ-ACK for a unicast PDCCH that activates or releases an SPS PDSCH, and/or a HARQ-ACK for a PDCCH that indicates a secondary serving cell (Secondary Cell, Scell) to sleep, and/or a HARQ-ACK for a PDCCH that triggers a type 3 codebook.

It should be noted that the group-common PDSCH or group-common PDCCH may also be referred to as a groupcast/multicast PDSCH or group cast/multicast PDCCH, which is mainly a PDSCH or PDCCH transmitted to a plurality of receivers on the same physical resource.

In this embodiment of this application, in the case that the time domain resources for the PUCCHs carrying the first HARQ-ACK and the second HARQ-ACK of the same priority overlap, or that the PUCCH carrying the first HARQ-ACK and the PUCCH carrying the second HARQ-ACK are in the same time unit but the terminal does not support transmission of PUCCHs of the two HARQ-ACKs of the same priority in one time unit, the terminal multiplexes the first HARQ-ACK and the second HARQ-ACK onto one PUCCH, thereby providing a method for handling overlapping of uplink channel PUCCH time domain resources. The method can be used in a scenario containing a HARQ-ACK for a group-common PDSCH, thereby improving effectiveness of a communication system.

It should be noted that, for ease of description, the first HARQ-ACK is referred to as an M HARQ-ACK, the second HARQ-ACK is referred to as a U HARQ-ACK, the corresponding PUCCH carrying the first HARQ-ACK is referred to as an M HARQ-ACK PUCCH, and the PUCCH carrying the second HARQ-ACK is referred to as a U HARQ-ACK PUCCH below.

Further, the high-priority first HARQ-ACK is referred to as an M HP HARQ-ACK, and the corresponding PUCCH is referred to as an M HP HARQ-ACK PUCCH; the low-priority first HARQ-ACK is referred to as an M LP HARQ-ACK, and the corresponding PUCCH is referred to as an M LP HARQ-ACK PUCCH; the high-priority second HARQ-ACK is referred to as a U HP HARQ-ACK, and the corresponding PUCCH is referred to as a U HP HARQ-ACK PUCCH; and the low-priority second HARQ-ACK is referred to as a U LP HARQ-ACK, and the corresponding PUCCH is referred to as a U LP HARQ-ACK PUCCH.

In a possible implementation, the terminal multiplexes the first HARQ-ACK and the second HARQ-ACK onto one PUCCH according to a preset rule.

The preset rule includes any one of the following:
(1) The terminal multiplexes the first HARQ-ACK and the second HARQ-ACK onto a first PUCCH, and in a case that time domain resources for the first PUCCH and the PUCCH carrying channel state information CSI and/or a scheduling request SR overlap, the terminal multiplexes the first HARQ-ACK and the second HARQ-ACK as well as the CSI and/or the SR onto a second PUCCH, where the CSI or the SR or both have the same priority as the first HARQ-ACK and the second HARQ-ACK.

In an embodiment of this application, the PUCCH carrying the CSI and/or the SR (referred to as a CSI PUCCH and/or an SR PUCCH below) may overlap at least one of the M HARQ-ACK PUCCH and the U HARQ-ACK PUCCH, or the CSI PUCCH or the SR PUCCH or both do not overlap at least one of the M HARQ-ACK PUCCH and the U HARQ-ACK PUCCH. For both cases, the terminal can use the above multiplexing manner, that is, the M HARQ-ACK and the U HARQ-ACK are first multiplexed onto one PUCCH, such as a PUCCH 1. It can be understood that since the M HARQ-ACK and the U HARQ-ACK have the same priority, after they are multiplexed onto one PUCCH, their priorities are still the same as before. If the PUCCH 1 overlaps the CSI PUCCH and/or the SR PUCCH of the same priority, the terminal then multiplexes the HARQ-ACKs (including the M HARQ-ACK and the U HARQ-ACK) in the PUCCH 1 and the CSI and/or the SR onto a PUCCH, such as a PUCCH 2.

It should be noted that a high-priority SR and a low-priority SR may be referred to as an HP SR and an LP SR, respectively.

(2) In a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, the terminal multiplexes the first HARQ-ACK and the second HARQ-ACK as well as the CSI and/or the SR onto a third PUCCH, where the CSI or the SR or both have the same priority as the first HARQ-ACK and the second HARQ-ACK.

In an embodiment of this application, in the case that the CSI PUCCH or the SR PUCCH or both overlap at least one of the M HARQ-ACK PUCCH and the U HARQ-ACK PUCCH, the terminal multiplexes the M HARQ-ACK and the U HARQ-ACK as well as the CSI and/or the SR onto one PUCCH for transmission.

Specifically, in a possible implementation, the terminal determines the third PUCCH from a PUCCH resource set corresponding to the first HARQ-ACK or a PUCCH resource set corresponding to the second HARQ-ACK based on a first number of bits, where the first number of bits is a sum of numbers of bits of the first HARQ-ACK and the second HARQ-ACK as well as the CSI and/or the SR.

In an embodiment of this application, the terminal determines one PUCCH from the PUCCH resource set corresponding to the M HARQ-ACK or the PUCCH resource set corresponding to the U HARQ-ACK based on the number of bits after the multiplexing. For example, the terminal is configured with two PUCCH-configs. A PUCCH resource set (resource set) 1 configured in a PUCCH-config is used for U HARQ-ACK transmission, and a PUCCH resource set (PUCCH resource set 2) configured in the other PUCCH-config is used for M HARQ-ACK transmission. Then, when the M HARQ-ACK and the U HARQ-ACK are multiplexed, one PUCCH resource is determined from the PUCCH resource set 1 or the PUCCH resource set 2 to transmit the multiplexed HARQ-ACKs.

In a special scenario, the first HARQ-ACK and the second HARQ-ACK are each 1 bit, and the overlapping channel is only the SR PUCCH (no CSI PUCCH). The terminal determines a multiplexing manner of the first HARQ-ACK, the second HARQ-ACK, and the SR based on a format of the third PUCCH and a status of the SR.

For example, the M HARQ-ACK and the U HARQ-ACK are each 1 bit, and the M HARQ-ACK and the U HARQ-ACK are multiplexed onto the U HARQ-ACK PUCCH or the M HARQ-ACK PUCCH. It is assumed that they are multiplexed onto the HARQ-ACK PUCCH, and that the M HARQ-ACK and the U HARQ-ACK are transmitted on the PUCCH as a 2-bit HARQ-ACK.

Specifically, that a multiplexing manner of the first HARQ-ACK, the second HARQ-ACK, and the SR is determined based on a format of the third PUCCH and a status of the SR includes the following:
(1) If the format of the third PUCCH is a PUCCH format 0, and the status of the SR is positive, the SR is multiplexed onto the HARQ-ACK PUCCH.
(2) If the format of the third PUCCH is a PUCCH format 1, a format of the SR PUCCH is the PUCCH format 1, and the status of the SR is positive, the M HARQ-ACK and the U HARQ-ACK are multiplexed onto the SR PUCCH; or if the format of the third PUCCH is the PUCCH format 1, the format of the SR PUCCH is the PUCCH format 1, and the status of the SR is negative, the third PUCCH is transmitted.
(3) In a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, the terminal multiplexes the second HARQ-ACK and the CSI and/or the SR onto a fourth PUCCH; and in a case that time domain resources for the fourth PUCCH and the PUCCH carrying the first HARQ-ACK overlap, the terminal multiplexes the first HARQ-ACK and the second HARQ-ACK as well as the CSI and/or the SR onto a fifth PUCCH, where the CSI or the SR or both have the same priority as the first HARQ-ACK and the second HARQ-ACK.

In an embodiment of this application, in the case that the CSI PUCCH or the SR PUCCH or both overlap at least one of the M HARQ-ACK PUCCH and the U HARQ-ACK PUCCH, the terminal first multiplexes the U HARQ-ACK and the CSI and/or the SR; if the multiplexed PUCCH overlaps the M HARQ-ACK PUCCH, or if the two do not overlap but the terminal does not support transmission of two HARQ-ACK PUCCHs of the same priority in one time unit, the terminal multiplexes the multiplexed PUCCH and the M HARQ-ACK PUCCH, that is, multiplexes the M HARQ-ACK, the U HARQ-ACK, and the CSI and/or the SR onto one PUCCH. Alternatively, when the terminal supports transmission of two HARQ-ACK PUCCHs of the same priority in one time unit, the terminal separately transmits the M HARQ-ACK PUCCH and the PUCCH onto which the U HARQ-ACK, the CSI, and the SR are multiplexed.

It should be noted that the terminal supporting transmission of two HARQ-ACK PUCCHs of the same priority in one time unit may be the terminal supporting transmission of the U HARQ-ACK PUCCH and the M HARQ-ACK PUCCH of the same priority in one time unit.

In a possible implementation, it may be assumed by default that the terminal does not support transmission of two HARQ-ACK PUCCHs of the same priority in one time unit (for example, one HARQ-ACK PUCCH for a unicast PDSCH/PDCCH, and one HARQ-ACK PUCCH for a group-common PDSCH/PDCCH), that is, the PUCCH onto which the U HARQ-ACK and the CSI and/or the SR are multiplexed and the M HARQ-ACK PUCCH are directly multiplexed, regardless of whether the time domain resources overlap.

In some implementations, there may be a case that the first HARQ-ACK and the second HARQ-ACK of the same priority as well as the first HARQ-ACK and the second HARQ-ACK of different priorities are present and time domain resources for a PUCCH carrying the first HARQ-ACK and a PUCCH carrying the second HARQ-ACK that are of different priorities overlap.

Specifically, the case that the first HARQ-ACK and the second HARQ-ACK of the same priority as well as the first HARQ-ACK and the second HARQ-ACK of different priorities are present includes any one of the following:
(1) The terminal configures or schedules the PUCCH carrying the first HARQ-ACK of the first priority, the PUCCH carrying the first HARQ-ACK of the second priority, and the PUCCH carrying the second HARQ-ACK of the first priority.
   That is, the terminal configures or schedules the M LP HARQ-ACK PUCCH, the M HP HARQ-ACK PUCCH, and the U LP HARQ-ACK PUCCH.
(2) The terminal configures or schedules the PUCCH carrying the first HARQ-ACK of the first priority, the PUCCH carrying the first HARQ-ACK of the second priority, and the PUCCH carrying the second HARQ-ACK of the second priority.
   That is, the terminal configures or schedules the M LP HARQ-ACK PUCCH, the M HP HARQ-ACK PUCCH, and the U HP HARQ-ACK PUCCH.
(3) The terminal configures or schedules the PUCCH carrying the first HARQ-ACK of the first priority, the PUCCH carrying the second HARQ-ACK of the first priority, and the PUCCH carrying the second HARQ-ACK of the second priority.
   That is, the terminal configures or schedules the M LP HARQ-ACK PUCCH, the U LP HARQ-ACK PUCCH, and the U HP HARQ-ACK PUCCH.
(4) The terminal configures or schedules the PUCCH carrying the first HARQ-ACK of the second priority, the PUCCH carrying the second HARQ-ACK of the first priority, and the PUCCH carrying the second HARQ-ACK of the second priority.
   That is, the terminal configures or schedules the M HP HARQ-ACK PUCCH, the U LP HARQ-ACK PUCCH, and the U HP HARQ-ACK PUCCH.
(5) The terminal configures or schedules the PUCCH carrying the first HARQ-ACK of the first priority, the PUCCH carrying the first HARQ-ACK of the second priority, the PUCCH carrying the second HARQ-ACK of the first priority, and the PUCCH carrying the second HARQ-ACK of the second priority.

That is, the terminal configures or schedules the M LP HARQ-ACK PUCCH, the M HP HARQ-ACK PUCCH, the U LP HARQ-ACK PUCCH, and the U HP HARQ-ACK PUCCH.

Specifically, for the case that the first HARQ-ACK and the second HARQ-ACK of the same priority as well as the first HARQ-ACK and the second HARQ-ACK of different priorities are present and the time domain resources for the PUCCH carrying the first HARQ-ACK and the PUCCH carrying the second HARQ-ACK that are of different priorities overlap, this method includes the following processing manners, where the second priority is higher than the first priority.

### Manner 1:

(1) The terminal cancels transmission of a PUCCH carrying the first HARQ-ACK of a first priority and/or a PUCCH carrying the second HARQ-ACK of the first priority.
(2) The terminal multiplexes the first HARQ-ACK of a second priority and the second HARQ-ACK of the second priority onto a sixth PUCCH according to the preset rule.

In an embodiment of this application, the terminal first discards or cancels the transmission of the low-priority HARQ-ACK PUCCH, and then multiplexes the high-priority HARQ-ACK onto one PUCCH for transmission.

### Manner 2:

The terminal multiplexes the first HARQ-ACK of the first priority and the second HARQ-ACK of the first priority onto a seventh PUCCH according to the preset rule.

In a case that time domain resources for the seventh PUCCH and a PUCCH carrying the first HARQ-ACK of the second priority overlap, and/or that time domain resources for the seventh PUCCH and a PUCCH carrying the second HARQ-ACK of the second priority overlap, the terminal cancels transmission of the seventh PUCCH.

The terminal multiplexes the first HARQ-ACK of the second priority and the second HARQ-ACK of the second priority onto an eighth PUCCH according to the preset rule.

In an embodiment of this application, the terminal first multiplexes the low-priority HARQ-ACK onto one PUCCH according to the above-mentioned preset rule for multiplexing HARQ-ACKs of the same priority, then handles an overlap between the multiplexed PUCCH and the high-priority HARQ-ACK PUCCH, that is, discards or cancels the transmission of the low-priority HARQ-ACK PUCCH, and finally multiplexes the high-priority HARQ-ACK onto one PUCCH according to the above-mentioned preset rule. If the high-priority HARQ-ACK PUCCH is followed by a low-priority PUCCH that overlaps its resources, the overlapping low-priority PUCCH is discarded or canceled.

### Manner 3:

The terminal multiplexes the first HARQ-ACK of the first priority and the second HARQ-ACK of the first priority onto a ninth PUCCH according to the preset rule.

The terminal multiplexes the first HARQ-ACK of the second priority and the second HARQ-ACK of the second priority onto a tenth PUCCH according to the preset rule.

In a case that time domain resources for the ninth PUCCH and the tenth PUCCH overlap, the terminal cancels transmission of the ninth PUCCH.

In an embodiment of this application, the terminal first multiplexes the high-priority HARQ-ACK and the low-priority HARQ-ACK respectively according to the above-mentioned preset rule, and then handles an overlap between the two multiplexed PUCCHs, that is, discards or cancels the transmission of the low-priority HARQ-ACK PUCCH.

The method for handling overlapping of PUCCH time domain resources in this application is described below with reference to specific embodiments.

### Embodiment 1:

For a conflict between resources for a low-priority HARQ-ACK PUCCH (U LP HARQ-ACK PUCCH) for a unicast PDSCH and a low-priority HARQ-ACK PUCCH (M LP HARQ-ACK PUCCH) for a group-common PDSCH, UE multiplexes a U LP HARQ-ACK and an M LP HARQ-ACK onto one PUCCH for transmission. However, if the overlapping channels at this time further include a CSI PUCCH and/or an LP SR PUCCH, the UE further needs to multiplex the CSI and/or the LP SR together, where the UE can handle the overlapping PUCCH channels in the following manners:

### Manner 1:

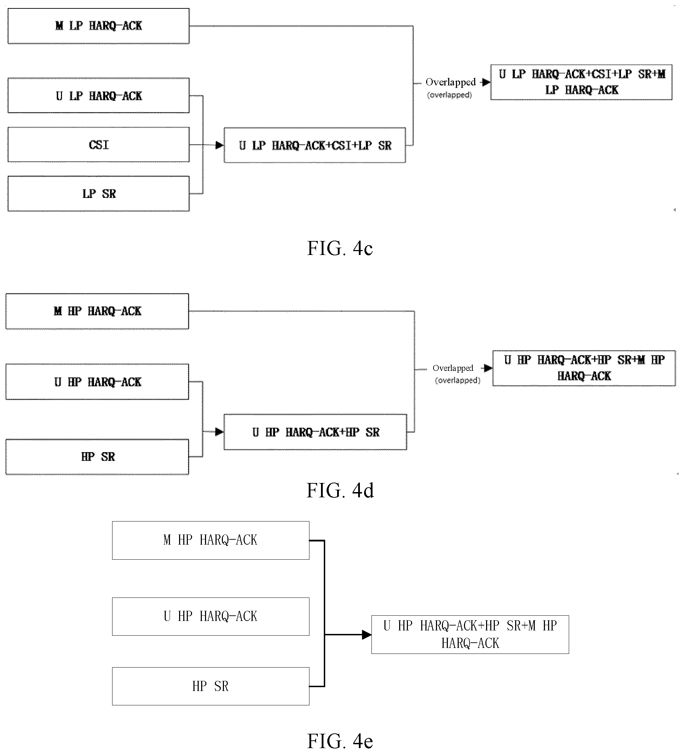

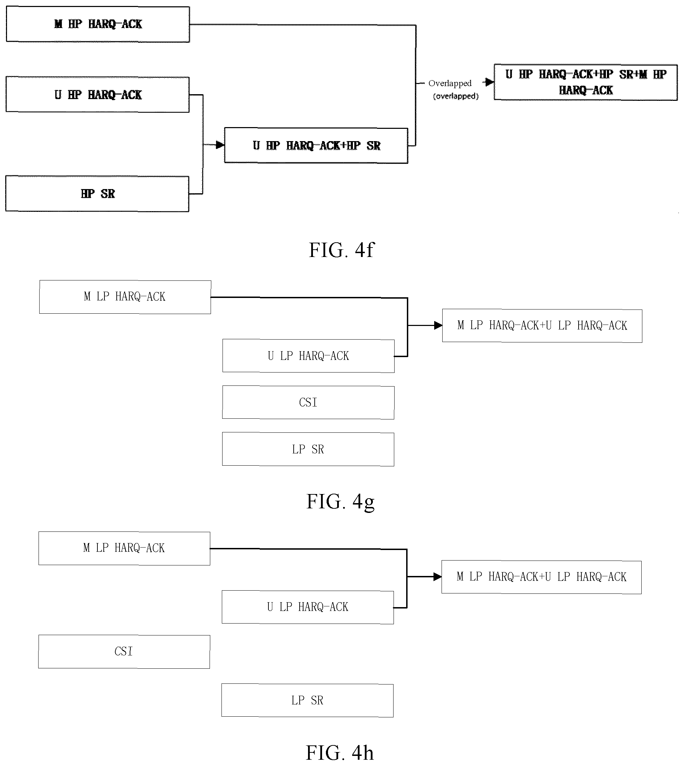

Referring to FIG. 4a, the UE first multiplexes the U LP HARQ-ACK and the M LP HARQ-ACK onto one channel, for example, onto a PUCCH 1; and if the PUCCH 1 overlaps the CSI and/or the LP SR, the UE multiplexes the U LP HARQ-ACK, the M LP HARQ-ACK, and the CSI and/or the LP SR onto one channel.

### Manner 2:

Referring to FIG. 4b, the UE multiplexes the U LP HARQ-ACK, the M LP HARQ-ACK, and the CSI and/or the LP SR onto one PUCCH channel.

### Manner 3:

Referring to FIG. 4c, the UE first handles an overlap between the U LP HARQ-ACK and the CSI/LP SR PUCCH. For example, the UE multiplexes the U LP HARQ-ACK and the CSI/LP SR onto one PUCCH. The channel may be a U LP HARQ-ACK PUCCH (for example, when the U LP HARQ-ACK PUCCH is of a PUCCH format 0, and the U LP HARQ-ACK PUCCH and the LP SR are multiplexed), or an LP SR PUCCH (for example, when the U LP HARQ-ACK PUCCH is of a PUCCH format 1, and the U LP HARQ-ACK PUCCH and the LP SR PUCCH are of the PUCCH format 1 and multiplexed), or a CSI PUCCH (for example, when the U LP HARQ-ACK is a HARQ-ACK of a feedback for an SPS PDSCH, that is, the U LP HARQ-ACK PUCCH has no corresponding PDCCH and the U LP HARQ-ACK and the CSI PUCCH are multiplexed), or a PUCCH determined based on a number of bits of multiplexed UCI (for example, when the U LP HARQ-ACK PUCCH has a corresponding PDCCH, or the CSI PUCCH is a multi-CSI PUCCH). It is assumed that the UE multiplexes the U LP HARQ-ACK and the CSI and/or the LP SR onto the PUCCH 1. If the PUCCH 1 overlaps the M LP HARQ-ACK PUCCH, the UE then multiplexes the M LP HARQ-ACK and the UCI carried by the PUCCH 1. If the PUCCH 1 does not overlap the M LP HARQ-ACK PUCCH, and the UE supports transmission of two PUCCHs carrying HARQ-ACKs of the same priority in one time unit (such as a slot), the UE separately transmits the PUCCH 1 and the M LP HARQ-ACK PUCCH. If the UE does not support transmission of two PUCCHs carrying HARQ-ACKs of the same priority in one time unit, the UE multiplexes the M LP HARQ-ACK PUCCH and the UCI carried by the PUCCH 1 onto one PUCCH, or the UE transmits one of the PUCCH 1 and the M LP HARQ-ACK PUCCH, and discards the other of them.

For example, the U LP HAQ-ACK PUCCH is of the PUCCH format 0/1, the M LP HAQ-ACK PUCCH is of the PUCCH format 0/1, and multiple LP SRs are of the PUCCH format 0/1.

If the UE first multiplexes the U LP HAQ-ACK and the M LP HAQ-ACK, a PUCCH, such as the PUCCH 1, should be determined based on a number of bits of the multiplexed HARQ-ACKs. If the multiplexed PUCCH still overlaps the LP SR resource, the LP SR and the HARQ-ACK are multiplexed (which can be in accordance with the existing multiplexing manner, for example, if the PUCCH 1 is of a PUCCH format 2/3/4, K-bit SR information and the HARQ-ACK are multiplexed, where K = log2(1 + m), and m represents a number of SR configurations that overlap resources for the PUCCH 1).

If the UE first handles the overlap between the U LP HARQ-ACK and the LP SR, the UE multiplexes only 1-bit SR information and the U LP HARQ-ACK. It is then multiplexed with the M LP HARQ-ACK, and if the multiplexed channel is of the PUCCH format 2/3/4, there is still only the 1-bit SR information on the PUCCH.

For an overlap between high-priority PUCCHs, the foregoing three methods are also applicable. Refer to FIG. 4d to FIG. 4f for details.

### Embodiment 2:

In this implementation, time domain resources for the M LP HARQ-ACK PUCCH and the U LP HARQ-ACK PUCCH do not overlap in one time unit, but the UE can only transmit one LP HARQ-ACK PUCCH in one time unit. At this time, the U LP HARQ-ACK PUCCH or the M LP HARQ-ACK PUCCH or both further overlap CSI PUCCH and/or LP SR time domain resources. In this case, the UE can handle it according to the following methods.

### Method 1:

The UE first multiplexes the M LP HARQ-ACK and the U LP HARQ-ACK onto one PUCCH, for example, onto the PUCCH 1; and if the PUCCH 1 overlaps the CSI and/or LP SR time domain resources, the UE then handles the conflict with the CSI and/or the LP SR. If there is no overlap, the HARQ-ACK PUCCH and the CSI and/or LP SR PUCCH are transmitted separately.

### Method 2:

The UE first handles overlapping channels (that is, channels with overlapping transmission resources) directly. In FIG. 4g, the UE first multiplexes the U LP HARQ-ACK, the CSI, and the LP SR, for example, onto the PUCCH 1. Then the M LP HARQ-ACK is multiplexed with the PUCCH 1 (regardless of whether they overlap or not). As shown in FIG. 4h, the UE first multiplexes the MLP HARQ-ACK and the CSI, and multiplexes the U LP HARQ-ACK and the LP SR. Then the multiplexed channels are multiplexed together (regardless of whether they overlap or not).

### Embodiment 3:

The M HARQ-ACK PUCCH and the U HARQ-ACK PUCCH of different priorities overlap, and the U HP HARQ-ACK PUCCH also overlaps the M HP HARQ-ACK PUCCH. In this case, the UE can handle it according to the following methods.

### Method 1:

The UE first discards or cancels the U LP HARQ-ACK PUCCH, and then multiplexes the U HP HARQ-ACK and the M HP HARQ-ACK onto one channel for transmission.

### Method 2:

The UE first multiplexes the U HP HARQ-ACK and the M HP HARQ-ACK onto one channel, for example, onto the PUCCH 1, for transmission, and discards or cancels transmission of the U LP HARQ-ACK PUCCH if the PUCCH 1 overlaps the U LP HARQ-ACK PUCCH. If the PUCCH 1 does not overlap the U LP HARQ-ACK PUCCH, the U LP HARQ-ACK PUCCH and the PUCCH 1 are transmitted separately.

### Embodiment 4:

In a time unit, the UE configures or schedules the M HP HARQ-ACK PUCCH, the M LP HARQ-ACK PUCCH, the U HP HARQ-ACK PUCCH, and the U LP HARQ-ACK PUCCH as well as the CSI, the HP SR, and the LP SR that are of different priorities. If the above channels overlap in time domain resources, the UE can handle it according to the following methods.

It should be noted that, in this embodiment of this application, for example, the CSI is low-priority CSI. The foregoing method is also applicable to high-priority CSI.

### Method 1:

The UE first handles an overlap between LP channels in the manner described in the foregoing Embodiment 1/2 (for the M LP HARQ-ACKs, the U LP HARQ-ACKs may also be non-overlapping), then handles an overlap between a high-priority channel and a low-priority channel (for example, by discarding or canceling transmission of the low-priority channel), then handles an overlap between HP channels in the manner described in the foregoing Embodiment 1/2 (for the M HP HARQ-ACKs, the U HP HARQ-ACKs may also be non-overlapping), and finally handles an overlap between a high-priority channel and a low-priority channel (for example, by discarding or canceling transmission of the low-priority channel).

### Method 2:

The UE first handles the overlap between the LP channels and the overlap between the HP channels in the manner described in the foregoing Embodiment 1/2 (for the M LP HARQ-ACKs, the U LP HARQ-ACKs may also be non-overlapping; for the M HP HARQ-ACKs, the U HP HARQ-ACKs may also be non-overlapping), then handles the overlap between the high-priority channel and the low-priority channel (for example, by discarding or canceling transmission of the low-priority channel), and then handles the overlap between the high-priority channel and the low-priority channel (for example, by discarding or canceling transmission of the low-priority channel).

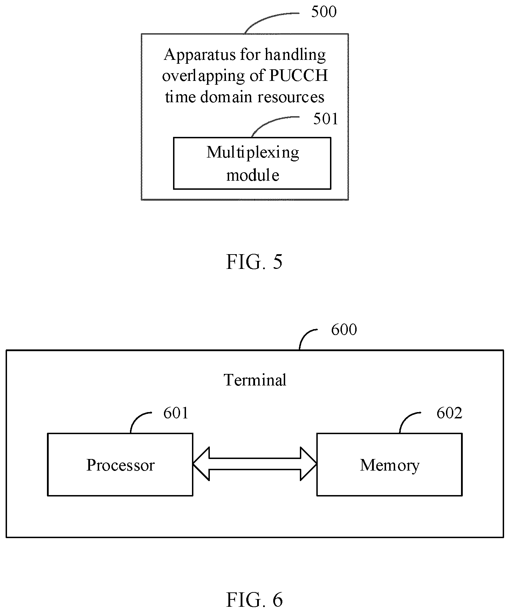

Referring to FIG. 5, an embodiment of this application provides an apparatus 500 for handling overlapping of PUCCH time domain resources, applied to a terminal. The apparatus includes:
a multiplexing module 501, configured to: in a case that a first HARQ-ACK and a second HARQ-ACK of the same priority are present and time domain resources for a PUCCH carrying the first HARQ-ACK and a PUCCH carrying the second HARQ-ACK overlap, or that the PUCCH carrying the first HARQ-ACK and the PUCCH carrying the second HARQ-ACK are in a same time unit and a terminal does not support transmission of PUCCHs of two HARQ-ACKs of the same priority in one time unit, multiplex, by the terminal, the first HARQ-ACK and the second HARQ-ACK onto one PUCCH, where
the first HARQ-ACK includes a HARQ-ACK for a group-common physical downlink shared channel PDSCH and/or a HARQ-ACK for a group-common PDCCH, and the second HARQ-ACK includes a HARQ-ACK for a unicast PDSCH and/or a HARQ-ACK for a unicast PDCCH.

In a possible implementation, the multiplexing module is further configured to:
multiplex, by the terminal, the first HARQ-ACK and the second HARQ-ACK onto one PUCCH according to a preset rule, where
the preset rule includes any one of the following:
   multiplexing, by the terminal, the first HARQ-ACK and the second HARQ-ACK onto a first PUCCH, and in a case that time domain resources for the first PUCCH and the PUCCH carrying channel state information CSI and/or a scheduling request SR overlap, multiplexing, by the terminal, the first HARQ-ACK and the second HARQ-ACK as well as the CSI and/or the SR onto a second PUCCH, where the CSI or the SR or both have the same priority as the first HARQ-ACK and the second HARQ-ACK;
   in a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, multiplexing, by the terminal, the first HARQ-ACK and the second HARQ-ACK as well as the CSI and/or the SR onto a third PUCCH, where the CSI and/or the SR has the same priority as the first HARQ-ACK and the second HARQ-ACK; and
   in a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, multiplexing, by the terminal, the second HARQ-ACK and the CSI and/or the SR onto a fourth PUCCH; and in a case that time domain resources for the fourth PUCCH and the PUCCH carrying the first HARQ-ACK overlap, multiplexing, by the terminal, the first HARQ-ACK and the second HARQ-ACK as well as the CSI and/or the SR onto a fifth PUCCH, where the CSI or the SR or both have the same priority as the first HARQ-ACK and the second HARQ-ACK.

In a possible implementation, the multiplexing module is further configured to:
determine, by the terminal, the third PUCCH from a PUCCH resource set corresponding to the first HARQ-ACK or a PUCCH resource set corresponding to the second HARQ-ACK based on a first number of bits, where
the first number of bits is a sum of numbers of bits of the first HARQ-ACK and the second HARQ-ACK as well as the CSI and/or the SR.

In a possible implementation, the apparatus further includes:
a determining module, configured to: in a case that the first HARQ-ACK and the second HARQ-ACK are each 1 bit, determine, by the terminal, a multiplexing manner of the first HARQ-ACK, the second HARQ-ACK, and the SR based on a format of the third PUCCH and a status of the SR.

In a possible implementation, the apparatus further includes:
a processing module, configured to: in a case that the first HARQ-ACK and the second HARQ-ACK of the same priority as well as the first HARQ-ACK and the second HARQ-ACK of different priorities are present and time domain resources for a PUCCH carrying the first HARQ-ACK and a PUCCH carrying the second HARQ-ACK that are of different priorities overlap,
cancel, by the terminal, transmission of a PUCCH carrying the first HARQ-ACK of a first priority and/or a PUCCH carrying the second HARQ-ACK of the first priority;
multiplex, by the terminal, the first HARQ-ACK of a second priority and the second HARQ-ACK of the second priority onto a sixth PUCCH according to the preset rule;
   or
multiplex, by the terminal, the first HARQ-ACK of the first priority and the second HARQ-ACK of the first priority onto a seventh PUCCH according to the preset rule;
in a case that time domain resources for the seventh PUCCH and a PUCCH carrying the first HARQ-ACK of the second priority overlap, and/or that time domain resources for the seventh PUCCH and a PUCCH carrying the second HARQ-ACK of the second priority overlap, cancel, by the terminal, transmission of the seventh PUCCH;
multiplex, by the terminal, the first HARQ-ACK of the second priority and the second HARQ-ACK of the second priority onto an eighth PUCCH according to the preset rule;
   or
multiplex, by the terminal, the first HARQ-ACK of the first priority and the second HARQ-ACK of the first priority onto a ninth PUCCH according to the preset rule;
multiplex, by the terminal, the first HARQ-ACK of the second priority and the second HARQ-ACK of the second priority onto a tenth PUCCH according to the preset rule; and
in a case that time domain resources for the ninth PUCCH and the tenth PUCCH overlap, cancel, by the terminal, transmission of the ninth PUCCH; where
the second priority is higher than the first priority.

In a possible implementation, the case that the first HARQ-ACK and the second HARQ-ACK of different priorities are also present includes any one of the following:
The terminal configures or schedules the PUCCH carrying the first HARQ-ACK of the first priority, the PUCCH carrying the first HARQ-ACK of the second priority, and the PUCCH carrying the second HARQ-ACK of the first priority.

The terminal configures or schedules the PUCCH carrying the first HARQ-ACK of the first priority, the PUCCH carrying the first HARQ-ACK of the second priority, and the PUCCH carrying the second HARQ-ACK of the second priority.

The terminal configures or schedules the PUCCH carrying the first HARQ-ACK of the first priority, the PUCCH carrying the second HARQ-ACK of the first priority, and the PUCCH carrying the second HARQ-ACK of the second priority.

The terminal configures or schedules the PUCCH carrying the first HARQ-ACK of the second priority, the PUCCH carrying the second HARQ-ACK of the first priority, and the PUCCH carrying the second HARQ-ACK of the second priority.

The terminal configures or schedules the PUCCH carrying the first HARQ-ACK of the first priority, the PUCCH carrying the first HARQ-ACK of the second priority, the PUCCH carrying the second HARQ-ACK of the first priority, and the PUCCH carrying the second HARQ-ACK of the second priority.

The apparatus for handling overlapping of PUCCH resources provided in this embodiment of this application can implement the processes that are implemented in the method embodiment shown in FIG. 3, with the same technical effects achieved. To avoid repetition, details are not described herein again.

Preferably, as shown in FIG. 6, an embodiment of this application further provides a terminal 600, including a processor 601, a memory 602, and a program or instructions stored on the memory 602 and capable of running on the processor 601. For example, when the communication device 600 is a terminal, upon the execution of the program or instructions by the processor 601, the processes of the foregoing configuration method embodiment are implemented, with the same technical effects achieved. When the terminal 600 is a network-side device, upon the execution of the program or instructions by the processor 601, the processes of the embodiment of the foregoing method for handling overlapping of PUCCH time domain resources are implemented, with the same technical effects achieved. To avoid repetition, details are not described herein again.

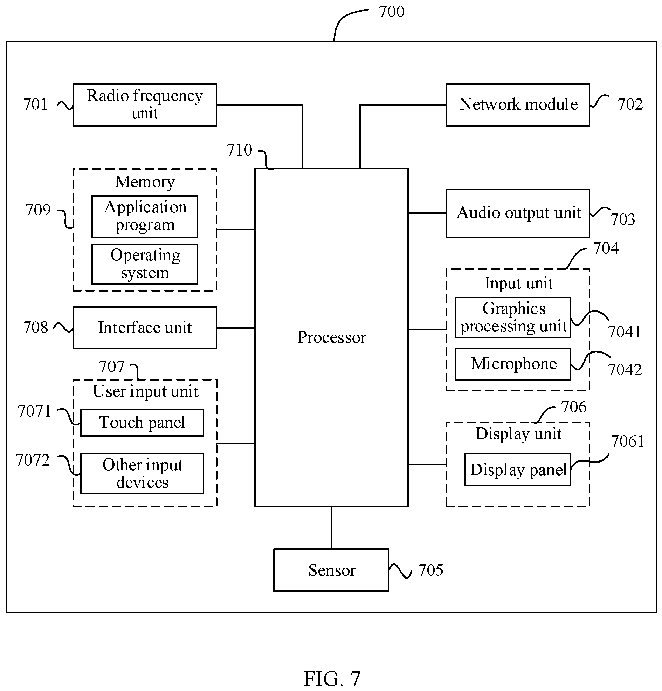

Specifically, FIG. 7 is a schematic diagram of a hardware structure of a terminal implementing an embodiment of this application.

The terminal 700 includes, but is not limited to, at least some of the components such as a radio frequency unit 701, a network module 702, an audio output unit 703, an input unit 704, a sensor 705, a display unit 706, a user input unit 707, an interface unit 708, a memory 709, and a processor 710.

Persons skilled in the art may understand that the terminal 700 may further include a power supply (for example, a battery) that supplies power to various components. The power supply may be logically connected to the processor 710 via a power management system, so that functions such as charging and discharging management and power consumption management are implemented by using the power management system. The terminal structure shown in FIG. 7 does not constitute a limitation to the terminal. The terminal may include more or fewer components than shown in the figure, or some components may be combined, or there may be a different component arrangement. Details are not described herein.

It should be understood that in an embodiment of this application, the input unit 704 may include a graphics processing unit (Graphics Processing Unit, GPU) 7041 and a microphone 7042. The graphics processing unit 7041 processes image data of a still image or a video obtained by an image capturing apparatus (for example, a camera) in a video capturing mode or an image capturing mode. The display unit 706 may include a display panel 7061, and the display panel 7061 may be configured in the form of liquid crystal display, organic light-emitting diode, or the like. The user input unit 707 includes a touch panel 7071 and other input devices 7072. The touch panel 7071 is also referred to as a touch screen. The touch panel 7071 may include two parts: a touch detection apparatus and a touch controller. The other input devices 7072 may include, but are not limited to, a physical keyboard, a functional button (such as a volume control button or a power on/off button), a trackball, a mouse, and a joystick. Details are not described herein.

In an embodiment of this application, the radio frequency unit 701 receives downlink data from a network-side device, and then sends the downlink data to the processor 710 for processing. In addition, uplink data is sent to the network-side device. Generally, the radio frequency unit 701 includes, but is not limited to, an antenna, at least one amplifier, a transceiver, a coupler, a low noise amplifier, a duplexer, and the like.

The memory 709 may be configured to store software programs or instructions and various data. The memory 709 may mainly include a program or instruction storage area and a data storage area. The program or instruction storage area may store an operating system, an application program or instructions required by at least one function (for example, a sound playing function and an image playing function), and the like. In addition, the memory 709 may include a high-speed random access memory, or may include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the memory may be at least one magnetic disk storage device, a flash memory device, or another non-volatile solid-state storage device.

The processor 710 may include one or more processing units. Optionally, the processor 710 may integrate an application processor and a modem processor. The application processor mainly processes an operating system, a user interface, an application program or instructions, and the like. The modem processor, such as a baseband processor, mainly processes wireless communication. It should be understood that alternatively, the modem processor may not be integrated into the processor 710.

The processor 710 is configured to: in a case that a first HARQ-ACK and a second HARQ-ACK of the same priority are present and time domain resources for a PUCCH carrying the first HARQ-ACK and a PUCCH carrying the second HARQ-ACK overlap, or that the PUCCH carrying the first HARQ-ACK and the PUCCH carrying the second HARQ-ACK are in a same time unit and a terminal does not support transmission of PUCCHs of two HARQ-ACKs of the same priority in one time unit, multiplex, by the terminal, the first HARQ-ACK and the second HARQ-ACK onto one PUCCH, where
the first HARQ-ACK includes a HARQ-ACK for a group-common physical downlink shared channel PDSCH and/or a HARQ-ACK for a group-common PDCCH, and the second HARQ-ACK includes a HARQ-ACK for a unicast PDSCH and/or a HARQ-ACK for a unicast PDCCH.

Optionally, the preset rule includes any one of the following:
multiplexing, by the terminal, the first HARQ-ACK and the second HARQ-ACK onto a first PUCCH, and in a case that time domain resources for the first PUCCH and the PUCCH carrying channel state information CSI and/or a scheduling request SR overlap, multiplexing, by the terminal, the first HARQ-ACK and the second HARQ-ACK as well as the CSI and/or the SR onto a second PUCCH, where the CSI or the SR or both have the same priority as the first HARQ-ACK and the second HARQ-ACK;
in a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, multiplexing, by the terminal, the first HARQ-ACK and the second HARQ-ACK as well as the CSI and/or the SR onto a third PUCCH, where the CSI or the SR or both have the same priority as the first HARQ-ACK and the second HARQ-ACK; and
in a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, multiplexing, by the terminal, the second HARQ-ACK and the CSI and/or the SR onto a fourth PUCCH; and in a case that time domain resources for the fourth PUCCH and the PUCCH carrying the first HARQ-ACK overlap, multiplexing, by the terminal, the first HARQ-ACK and the second HARQ-ACK as well as the CSI and/or the SR onto a fifth PUCCH, where the CSI or the SR or both have the same priority as the first HARQ-ACK and the second HARQ-ACK.

Optionally, the processor 710 is configured to determine, by the terminal, the third PUCCH from a PUCCH resource set corresponding to the first HARQ-ACK or a PUCCH resource set corresponding to the second HARQ-ACK based on a first number of bits, where
the first number of bits is a sum of numbers of bits of the first HARQ-ACK and the second HARQ-ACK as well as the CSI and/or the SR.

Optionally, the processor 710 is configured to:
in a case that the first HARQ-ACK and the second HARQ-ACK are each 1 bit, determine, by the terminal, a multiplexing manner of the first HARQ-ACK, the second HARQ-ACK, and the SR based on a format of the third PUCCH and a status of the SR.

Optionally, the processor 710 is configured to: in a case that the first HARQ-ACK and the second HARQ-ACK of the same priority as well as the first HARQ-ACK and the second HARQ-ACK of different priorities are present and time domain resources for a PUCCH carrying the first HARQ-ACK and a PUCCH carrying the second HARQ-ACK that are of different priorities overlap,
cancel, by the terminal, transmission of a PUCCH carrying the first HARQ-ACK of a first priority and/or a PUCCH carrying the second HARQ-ACK of the first priority;
multiplex, by the terminal, the first HARQ-ACK of a second priority and the second HARQ-ACK of the second priority onto a sixth PUCCH according to the preset rule;
   or
multiplex, by the terminal, the first HARQ-ACK of the first priority and the second HARQ-ACK of the first priority onto a seventh PUCCH according to the preset rule;
in a case that time domain resources for the seventh PUCCH and a PUCCH carrying the first HARQ-ACK of the second priority overlap, and/or that time domain resources for the seventh PUCCH and a PUCCH carrying the second HARQ-ACK of the second priority overlap, cancel, by the terminal, transmission of the seventh PUCCH;
multiplex, by the terminal, the first HARQ-ACK of the second priority and the second HARQ-ACK of the second priority onto an eighth PUCCH according to the preset rule;
   or
multiplex, by the terminal, the first HARQ-ACK of the first priority and the second HARQ-ACK of the first priority onto a ninth PUCCH according to the preset rule;
multiplex, by the terminal, the first HARQ-ACK of the second priority and the second HARQ-ACK of the second priority onto a tenth PUCCH according to the preset rule; and
in a case that time domain resources for the ninth PUCCH and the tenth PUCCH overlap, cancel, by the terminal, transmission of the ninth PUCCH; where
the second priority is higher than the first priority.

Optionally, the case that the first HARQ-ACK and the second HARQ-ACK of different priorities are also present includes any one of the following:
The terminal configures or schedules the PUCCH carrying the first HARQ-ACK of the first priority, the PUCCH carrying the first HARQ-ACK of the second priority, and the PUCCH carrying the second HARQ-ACK of the first priority.

The terminal configures or schedules the PUCCH carrying the first HARQ-ACK of the first priority, the PUCCH carrying the first HARQ-ACK of the second priority, and the PUCCH carrying the second HARQ-ACK of the second priority.

The terminal configures or schedules the PUCCH carrying the first HARQ-ACK of the first priority, the PUCCH carrying the second HARQ-ACK of the first priority, and the PUCCH carrying the second HARQ-ACK of the second priority.

The terminal configures or schedules the PUCCH carrying the first HARQ-ACK of the second priority, the PUCCH carrying the second HARQ-ACK of the first priority, and the PUCCH carrying the second HARQ-ACK of the second priority.

The terminal configures or schedules the PUCCH carrying the first HARQ-ACK of the first priority, the PUCCH carrying the first HARQ-ACK of the second priority, the PUCCH carrying the second HARQ-ACK of the first priority, and the PUCCH carrying the second HARQ-ACK of the second priority.

An embodiment of this application further provides a readable storage medium. The readable storage medium stores a program or instructions, and when the program or instructions are executed by a processor, the processes of the foregoing method embodiment shown in FIG. 3 are implemented, with the same technical effects achieved. To avoid repetition, details are not described herein again.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or a compact disc.

An embodiment of this application further provides a computer program product. The computer program product is stored in a non-volatile storage medium, and the computer program product is executed by at least one processor to implement the steps of the method for handling shown in FIG. 3.

An embodiment of this application further provide a chip. The chip includes a processor and a communication interface, the communication interface and the processor are coupled to each other, and the processor is configured to run a program or instructions of a network-side device to implement the processes of the foregoing method embodiment shown in FIG. 3, with the same technical effects achieved. To avoid repetition, details are not described herein again.

It should be understood that the chip mentioned in this embodiment of this application may also be referred to as a system-on-chip, a system chip, a chip system, a system on a chip, or the like.

An embodiment of this application additionally provides a communication device. The communication device is configured to perform the processes of the foregoing method embodiment shown in FIG. 3, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Through the description of the foregoing embodiments, persons skilled in the art can clearly understand that the method of the foregoing embodiments can be implemented by means of software combined with a necessary universal hardware platform, and certainly, can also be implemented through hardware, but in many cases, the former is a better implementation. Based on such an understanding, the technical solutions of this application essentially or the part contributing to the prior art may be implemented in the form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific implementations. The foregoing specific implementations are merely illustrative instead of restrictive. Under the enlightenment of this application, persons of ordinary skills in the art may make many forms without departing from the essence of this application and the scope of protection of claims, all of which fall within the protection of this application.

## Claims

1. A method for handling overlapping of physical uplink control channel PUCCH time domain resources, wherein the method comprises:
in a case that a first hybrid automatic repeat request-acknowledgment HARQ-ACK and a second HARQ-ACK of the same priority are present and time domain resources for a PUCCH carrying the first HARQ-ACK and a PUCCH carrying the second HARQ-ACK overlap, or that the PUCCH carrying the first HARQ-ACK and the PUCCH carrying the second HARQ-ACK are in a same time unit and a terminal does not support transmission of PUCCHs of two HARQ-ACKs of the same priority in one time unit, multiplexing, by the terminal, the first HARQ-ACK and the second HARQ-ACK onto one PUCCH, wherein
the first HARQ-ACK comprises a HARQ-ACK for a group-common physical downlink shared channel PDSCH and/or a HARQ-ACK for a group-common PDCCH, and the second HARQ-ACK comprises a HARQ-ACK for a unicast PDSCH and/or a HARQ-ACK for a unicast PDCCH.

2. The method according to claim 1, wherein the multiplexing, by the terminal, the first HARQ-ACK and the second HARQ-ACK onto one PUCCH comprises:
multiplexing, by the terminal, the first HARQ-ACK and the second HARQ-ACK onto one PUCCH according to a preset rule, wherein
the preset rule comprises any one of the following:
multiplexing, by the terminal, the first HARQ-ACK and the second HARQ-ACK onto a first PUCCH, and in a case that time domain resources for the first PUCCH and the PUCCH carrying channel state information CSI and/or a scheduling request SR overlap, multiplexing, by the terminal, the first HARQ-ACK and the second HARQ-ACK as well as the CSI and/or the SR onto a second PUCCH, wherein the CSI or the SR or both have the same priority as the first HARQ-ACK and the second HARQ-ACK;
in a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, multiplexing, by the terminal, the first HARQ-ACK and the second HARQ-ACK as well as the CSI and/or the SR onto a third PUCCH, wherein the CSI or the SR or both have the same priority as the first HARQ-ACK and the second HARQ-ACK; and
in a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, multiplexing, by the terminal, the second HARQ-ACK and the CSI and/or the SR onto a fourth PUCCH; and in a case that time domain resources for the fourth PUCCH and the PUCCH carrying the first HARQ-ACK overlap, multiplexing, by the terminal, the first HARQ-ACK and the second HARQ-ACK as well as the CSI and/or the SR onto a fifth PUCCH, wherein the CSI or the SR or both have the same priority as the first HARQ-ACK and the second HARQ-ACK.

3. The method according to claim 2, wherein the multiplexing the first HARQ-ACK and the second HARQ-ACK as well as the CSI and/or the SR onto a third PUCCH comprises:
determining, by the terminal, the third PUCCH from a PUCCH resource set corresponding to the first HARQ-ACK or a PUCCH resource set corresponding to the second HARQ-ACK based on a first number of bits, wherein
the first number of bits is a sum of numbers of bits of the first HARQ-ACK and the second HARQ-ACK as well as the CSI and/or the SR.

4. The method according to claim 2 or 3, wherein the method further comprises:
in a case that the first HARQ-ACK and the second HARQ-ACK are each 1 bit, determining, by the terminal, a multiplexing manner of the first HARQ-ACK, the second HARQ-ACK, and the SR based on a format of the third PUCCH and a status of the SR.

5. The method according to claim 2, wherein in a case that the first HARQ-ACK and the second HARQ-ACK of the same priority as well as the first HARQ-ACK and the second HARQ-ACK of different priorities are present and time domain resources for a PUCCH carrying the first HARQ-ACK and a PUCCH carrying the second HARQ-ACK that are of different priorities overlap, the method further comprises:
canceling, by the terminal, transmission of a PUCCH carrying the first HARQ-ACK of a first priority and/or a PUCCH carrying the second HARQ-ACK of the first priority;
multiplexing, by the terminal, the first HARQ-ACK of a second priority and the second HARQ-ACK of the second priority onto a sixth PUCCH according to the preset rule;
or
multiplexing, by the terminal, the first HARQ-ACK of the first priority and the second HARQ-ACK of the first priority onto a seventh PUCCH according to the preset rule;
in a case that time domain resources for the seventh PUCCH and a PUCCH carrying the first HARQ-ACK of the second priority overlap, and/or that time domain resources for the seventh PUCCH and a PUCCH carrying the second HARQ-ACK of the second priority overlap, canceling, by the terminal, transmission of the seventh PUCCH;
multiplexing, by the terminal, the first HARQ-ACK of the second priority and the second HARQ-ACK of the second priority onto an eighth PUCCH according to the preset rule;
or
multiplexing, by the terminal, the first HARQ-ACK of the first priority and the second HARQ-ACK of the first priority onto a ninth PUCCH according to the preset rule;
multiplexing, by the terminal, the first HARQ-ACK of the second priority and the second HARQ-ACK of the second priority onto a tenth PUCCH according to the preset rule; and
in a case that time domain resources for the ninth PUCCH and the tenth PUCCH overlap, canceling, by the terminal, transmission of the ninth PUCCH; wherein
the second priority is higher than the first priority.

6. The method according to claim 5, wherein the case that the first HARQ-ACK and the second HARQ-ACK of the same priority as well as the first HARQ-ACK and the second HARQ-ACK of different priorities are present comprises any one of the following:
the terminal configures or schedules the PUCCH carrying the first HARQ-ACK of the first priority, the PUCCH carrying the first HARQ-ACK of the second priority, and the PUCCH carrying the second HARQ-ACK of the first priority;
the terminal configures or schedules the PUCCH carrying the first HARQ-ACK of the first priority, the PUCCH carrying the first HARQ-ACK of the second priority, and the PUCCH carrying the second HARQ-ACK of the second priority;
the terminal configures or schedules the PUCCH carrying the first HARQ-ACK of the first priority, the PUCCH carrying the second HARQ-ACK of the first priority, and the PUCCH carrying the second HARQ-ACK of the second priority;
the terminal configures or schedules the PUCCH carrying the first HARQ-ACK of the second priority, the PUCCH carrying the second HARQ-ACK of the first priority, and the PUCCH carrying the second HARQ-ACK of the second priority; and
the terminal configures or schedules the PUCCH carrying the first HARQ-ACK of the first priority, the PUCCH carrying the first HARQ-ACK of the second priority, the PUCCH carrying the second HARQ-ACK of the first priority, and the PUCCH carrying the second HARQ-ACK of the second priority.

7. An apparatus for handling overlapping of PUCCH time domain resources, wherein the apparatus is applied to a terminal and comprises:
a multiplexing module, configured to: in a case that a first HARQ-ACK and a second HARQ-ACK of the same priority are present and time domain resources for a PUCCH carrying the first HARQ-ACK and a PUCCH carrying the second HARQ-ACK overlap, or that the PUCCH carrying the first HARQ-ACK and the PUCCH carrying the second HARQ-ACK are in a same time unit and a terminal does not support transmission of PUCCHs of two HARQ-ACKs of the same priority in one time unit, multiplex, by the terminal, the first HARQ-ACK and the second HARQ-ACK onto one PUCCH, wherein
the first HARQ-ACK comprises a HARQ-ACK for a group-common PDSCH and/or a HARQ-ACK for a group-common PDCCH, and the second HARQ-ACK comprises a HARQ-ACK for a unicast PDSCH and/or a HARQ-ACK for a unicast PDCCH.

8. The apparatus according to claim 7, wherein the multiplexing module is further configured to:
multiplex, by the terminal, the first HARQ-ACK and the second HARQ-ACK onto one PUCCH according to a preset rule, wherein
the preset rule comprises any one of the following:
multiplexing, by the terminal, the first HARQ-ACK and the second HARQ-ACK onto a first PUCCH, and in a case that time domain resources for the first PUCCH and the PUCCH carrying channel state information CSI and/or a scheduling request SR overlap, multiplexing, by the terminal, the first HARQ-ACK and the second HARQ-ACK as well as the CSI and/or the SR onto a second PUCCH, wherein the CSI or the SR or both have the same priority as the first HARQ-ACK and the second HARQ-ACK;
in a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, multiplexing, by the terminal, the first HARQ-ACK and the second HARQ-ACK as well as the CSI and/or the SR onto a third PUCCH, wherein the CSI or the SR or both have the same priority as the first HARQ-ACK and the second HARQ-ACK; and
in a case that time domain resources for the PUCCH carrying the CSI and/or the SR and the PUCCH carrying the first HARQ-ACK overlap, and/or that time domain resources for the PUCCH carrying the CSI and/or the SR and the PUCCH carrying the second HARQ-ACK overlap, multiplexing, by the terminal, the second HARQ-ACK and the CSI and/or the SR onto a fourth PUCCH; and in a case that time domain resources for the fourth PUCCH and the PUCCH carrying the first HARQ-ACK overlap, multiplexing, by the terminal, the first HARQ-ACK and the second HARQ-ACK as well as the CSI and/or the SR onto a fifth PUCCH, wherein the CSI or the SR or both have the same priority as the first HARQ-ACK and the second HARQ-ACK.

9. The apparatus according to claim 8, wherein the multiplexing module is further configured to:
determine, by the terminal, the third PUCCH from a PUCCH resource set corresponding to the first HARQ-ACK or a PUCCH resource set corresponding to the second HARQ-ACK based on a first number of bits, wherein
the first number of bits is a sum of numbers of bits of the first HARQ-ACK and the second HARQ-ACK as well as the CSI and/or the SR.

10. The apparatus according to claim 8 or 9, wherein the apparatus further comprises:
a determining module, configured to: in a case that the first HARQ-ACK and the second HARQ-ACK are each 1 bit, determine, by the terminal, a multiplexing manner of the first HARQ-ACK, the second HARQ-ACK, and the SR based on a format of the third PUCCH and a status of the SR.

11. The apparatus according to claim 8, wherein the apparatus further comprises:
a processing module, configured to: in a case that the first HARQ-ACK and the second HARQ-ACK of the same priority as well as the first HARQ-ACK and the second HARQ-ACK of different priorities are present and time domain resources for a PUCCH carrying the first HARQ-ACK and a PUCCH carrying the second HARQ-ACK that are of different priorities overlap,
cancel, by the terminal, transmission of a PUCCH carrying the first HARQ-ACK of a first priority and/or a PUCCH carrying the second HARQ-ACK of the first priority;
multiplex, by the terminal, the first HARQ-ACK of a second priority and the second HARQ-ACK of the second priority onto a sixth PUCCH according to the preset rule;
or
multiplex, by the terminal, the first HARQ-ACK of the first priority and the second HARQ-ACK of the first priority onto a seventh PUCCH according to the preset rule;
in a case that time domain resources for the seventh PUCCH and a PUCCH carrying the first HARQ-ACK of the second priority overlap, and/or that time domain resources for the seventh PUCCH and a PUCCH carrying the second HARQ-ACK of the second priority overlap, cancel, by the terminal, transmission of the seventh PUCCH;
multiplex, by the terminal, the first HARQ-ACK of the second priority and the second HARQ-ACK of the second priority onto an eighth PUCCH according to the preset rule;
or
multiplex, by the terminal, the first HARQ-ACK of the first priority and the second HARQ-ACK of the first priority onto a ninth PUCCH according to the preset rule;
multiplex, by the terminal, the first HARQ-ACK of the second priority and the second HARQ-ACK of the second priority onto a tenth PUCCH according to the preset rule; and
in a case that time domain resources for the ninth PUCCH and the tenth PUCCH overlap, cancel, by the terminal, transmission of the ninth PUCCH; wherein
the second priority is higher than the first priority.

12. The apparatus according to claim 11, wherein the case that the first HARQ-ACK and the second HARQ-ACK of the same priority as well as the first HARQ-ACK and the second HARQ-ACK of different priorities are present comprises any one of the following:
the terminal configures or schedules the PUCCH carrying the first HARQ-ACK of the first priority, the PUCCH carrying the first HARQ-ACK of the second priority, and the PUCCH carrying the second HARQ-ACK of the first priority;
the terminal configures or schedules the PUCCH carrying the first HARQ-ACK of the first priority, the PUCCH carrying the first HARQ-ACK of the second priority, and the PUCCH carrying the second HARQ-ACK of the second priority;
the terminal configures or schedules the PUCCH carrying the first HARQ-ACK of the first priority, the PUCCH carrying the second HARQ-ACK of the first priority, and the PUCCH carrying the second HARQ-ACK of the second priority;
the terminal configures or schedules the PUCCH carrying the first HARQ-ACK of the second priority, the PUCCH carrying the second HARQ-ACK of the first priority, and the PUCCH carrying the second HARQ-ACK of the second priority; and
the terminal configures or schedules the PUCCH carrying the first HARQ-ACK of the first priority, the PUCCH carrying the first HARQ-ACK of the second priority, the PUCCH carrying the second HARQ-ACK of the first priority, and the PUCCH carrying the second HARQ-ACK of the second priority.

13. A terminal, comprising: a processor, a memory, and a program stored on the memory and capable of running on the processor, wherein when the program is executed by the processor, the steps of the method according to any one of claims 1 to 6 are implemented.

14. A readable storage medium, wherein the readable storage medium stores a program or instructions, and when the program or instructions are executed by a processor, the steps of the method according to any one of claims 1 to 6 are implemented.

15. A chip, comprising a processor and a communication interface, wherein the communication interface and the processor are coupled to each other, and the processor is configured to run a program or instructions to implement the steps of the method according to any one of claims 1 to 6.

16. A computer program product, wherein the computer program product is stored on a non-volatile readable storage medium, and the computer program product is executed by at least one processor to implement the steps of the method according to any one of claims 1 to 6.

17. A communication device configured to perform the steps of the method according to any one of claims 1 to 6.
